# EUROPEAN PATENT APPLICATION

(11) **EP 4 439 110 A1**
(43) Date of publication of application: **02.10.2024**
(21) Application number: 23164230.7
(22) Date of filing: 27.03.2023
(51) Int. Cl.: G01S 7/02, G01S 13/931, H05K 5/00

(54) **HOUSING PRODUCT FOR A RADAR SENSOR AND METHOD FOR ASSEMBLING A HOUSING PRODUCT FOR A RADAR SENSOR**

(71) Applicant: Magna Electronics Sweden AB, 447 37 Vårgårda (SE)
(72) Inventor: SAVIN, Loredana, 700051 Iasi (RO)
(74) Representative: Reichert & Lindner Partnerschaft Patentanwälte

(57) **Abstract**

A housing product (1) for a radar sensor and a method for assembling a housing product for a radar sensor (1) are disclosed. A first subassembly (3) and a second subassembly (5) are assembled to form the housing product (1). The first subassembly (3) comprises at least a radome (3), an RF-PCBA (7) and a spacer (8) which are held in a fixed position by a heat stacking process. The second subassembly (5) is defined by a housing part (4) and a DSP-PCBA (13). The joined first subassembly (3) and second subassembly (5) form the housing product (1) and prevent a movement of the DSP-PCBA (13) in a Z-coordinate direction (Z).

## Description

### FIELD OF THE INVENTION

The invention relates to a housing product for a radar sensor.

The invention further relates to a method for assembling a housing product for a radar sensor.

### DESCRIPTION OF THE BACKGROUND ART

DE 10 2015 223 243 A1 relates to a housing for a radar sensor. A housing cover is designed as a radome, with a cover base and with a cover wall. The housing bottom with a peripheral bottom wall is connected to the housing cover to form an accommodation space for accommodating electronics of a radar sensor inside the housing base and housing cover.

DE 10 2017 218 103 A1 relates to a housing for a radar sensor.

EP 3 712 640 A1 relates to a radar circuit package for protecting a radar circuit and for effective radiation of a radar signal. The radar circuit package comprises a radar circuit with an antenna and a dielectric cover on which the radar circuit is mounted. A lead frame is configured to be electronically connected to the radar circuit by means of at least one electric connection and a dielectric filling, which is configured to cover the radar circuit. The dielectric cover and the dielectric filling are configured to protect the radar circuit.

### SUMMARY OF THE INVENTION

It is an object of the present invention to provide a housing product for a radar sensor which reduces manufacturing steps and facilitates the assembly of electrical connectors in the housing.

The above object is achieved by a housing product for a radar sensor according to the features of claim 1.

It is a further object of the present invention to provide a method for assembling a housing product for a radar sensor, which method reduces manufacturing steps and facilitates the assembly of electrical connectors in the housing.

The above object is achieved by a method for assembling a housing product for a radar sensor according to the features of claim 6.

### DEFINITIONS AND ABBREVIATIONS:

### Board-to-board connector (BTB connector):

BTB connectors are used to connect printed circuit boards (PCB), electronic components that contain a conductive pattern printed on the surface of the insulating base in an accurate and repeatable manner. Each terminal on a BTB connector is connected to a PCB.

### Printed circuit board assembly (PCBA):

A PCBA describes the completed board after all components have been soldered and installed on a PCB.

### Radio frequency printed circuit board assembly (RF-PCBA):

In the RF-PCBA design, each component should be closely arranged to ensure the shortest connection. When selecting components to operate in a high frequency environment, the surface mounted devices (SMD) should be as small as possible, and component pins are generally very short.

### Digital signal processor printed circuit board assembly (DSP-PCBA):

DSP- PCBA hosts software that processes the digitized received radar signals to generate a list of radar targets with associated parameters.

### Radome:

A radome is a structural, weatherproof enclosure that protects a radar antenna. The radome is constructed of material that is transparent to radio waves. Radomes protect the antenna from weather and hide the antenna's electronic equipment from view.

In an embodiment of the housing product for a radar sensor according to the invention, the housing product for the radar sensor is defined by a first subassembly which is joined with a second subassembly. The first subassembly comprises at least a radome, an RF-PCBA, and spacer. According to the prior art design the first subassembly has a shield placed between the RF-PCBA. The RF-PCBA is sandwiched between the shield of the radome and the spacer. The radome has at least four pins to fix the RF-PCBA and the shield in position. The second subassembly comprises a housing part with a DSP-PCBA positioned at a bottom of the housing part. The RF-PCBA has a first BTB connector and the DSP-PCBA has a second BTB connector which are electrically connected, when the first subassembly and the second subassembly are joined together. At least two modified pins of the radome substitute at least two of the four pins of the radome. A homogeneous contact surface is provided around an edge of the bottom of the housing part. Centering pins for the DSP-PCBA are formed on the bottom of the housing part to align the DSP-PCBA so that the DSP-PCBA rests on the contact surface.

The advantage of the housing product for a radar sensor is that an improved centered position of the RF-PCBA is achieved, and the clearance of the DSP-PCBA in the X-coordinate direction and the Y-coordinate direction enables a better assembly of the first BTB connector of the RF-PCBA with the second BTB connector of the DSP-PCBA. In addition, no heat stacking process is performed with the DSP-PCBA in the housing part.

In an embodiment according to the invention, the radome has two pins and two modified pins. Each modified pin carries at least three longitudinally arranged ribs. The ribs should be dimensioned so that each of the modified pins contacts with its ribs a circumference of a corresponding assembly hole of the RF-PCBA. The advantage of the modified pins is that the ribs are used to hold the RF-PCBA in a centered position to the greatest extent possible.

In an embodiment according to the invention, each of the centering pins reaches without contact through a corresponding hole formed in the DSP-PCBA. The non-contact penetration of the centering pins through the holes in the DSP-PCBA allows the DSP-PCBA to be moved in an X-coordinate direction and a Y-coordinate direction when the DSP-PCBA is resting on the contact surface on the bottom. The advantage of the DSP-PCBA's mobility is that it assists in aligning the first BTB connector of the RF-PCBA and the second BTB connector of the DSP-PCBA during the assembly process.

In an embodiment according to the invention, the first BTB connector of the RF-PCBA and the second BTB connector of the DSP-PCBA are in an assembled position when a surrounding edge of the radome of the first subassembly is laser welded to a surrounding rib of the surrounding wall of the housing part.

In an embodiment according to the invention, the spacer of the first subassembly has formed a plurality of tabs, and each tab rests on a grounded area when the first subassembly is assembled with the second subassembly to form the housing. The grounded area is placed between the tabs and the DSP-PCBA of the second subassembly. This has the advantage that the tabs of the spacer , which is part of the first subassembly, hold the DSP-PCBA in place in the second subassembly.

In an embodiment of the method for assembling a housing product for a radar sensor according to the invention, a stacking step is performed. At least a RF-PCBA and a spacer are stacked on a radome. The radome carries at least two pins and at least two modified pins. Each modified pin has at least three longitudinally arranged ribs that contact a circumference of a corresponding assembly hole of the RF-PCBA or a corresponding assembly hole of the spacer. The RF-PCBA and the spacer are then fixed in the radome using a heat stacking process which acts only on the two pins to form a first subassembly. A second subassembly is formed by inserting a DSP-PCBA into a housing part. During insertion, at least two centering pins reach through a corresponding hole of the DSP-PCBA until the DSP-PCBA rests on a homogeneous contact surface provided around an edge of a bottom of the housing part to form a second subassembly. The first subassembly is lowered into the second subassembly. The first subassembly is inserted into the second subassembly such that the housing product is formed and a first BTB connector of the RF-PCBA is aligned with a second BTB connector of the DSP-PCBA. Once the first subassembly is fully inserted into the second subassembly, a laser welding of a peripheral rim of the first subassembly to a surrounding rib of the second subassembly is carried out. The laser welding process completes the housing assembly.

The advantage of the method according to the invention is that a heat stacking process for mounting the DSP-PCBA in the housing part is saved. In addition, the alignment and the assembly of the first BTB connector of the RF-PCBA and the second BTB connector of the DSP-PCBA is facilitated by the mobility of the DSP-PCBA in the X-coordinate direction and the Y-coordinate direction.

In an embodiment of the method according to the invention, prior to the lowering the first subassembly in a Z-coordinate direction, the first subassembly is prepositioned in an X-coordinate direction, a Y- coordinate direction, and the Z-coordinate direction with respect to the second subassembly.

In an embodiment of the method according to the invention, the lowering of the first subassembly into the housing part of the second subassembly is performed along the Z-coordinate direction. The DSP-PCBA is positioned by means of centering pins that contactless reach through corresponding holes formed in the DSP-PCBA. This special arrangement allows the DSP-PCBA to be moved in the X-coordinate direction and the Y- coordinate direction, which facilitates the assembly of the first BTB connector of the first subassembly and the second BTB connector of the second subassembly.

In an embodiment of the method according to the invention, once the laser welding is complete, a plurality of tabs of the shield of the first subassembly contact the DSP-PCBA to hold the DSP-PCBA in place and prevent movement of the DSP-PCBA in the Z-coordinate direction. The tabs contact a grounded area which is placed between the tabs of the spacer of the first subassembly and the DSP-PCBA of the second subassembly.

The assembly process of the housing product for the radar sensor according to the invention results in an improved radar product. Production-related scrap during assembly of the radar product is reduced. A redesign of the product and manufacturing provides for centering and floating features which assist the alignment and the assembly.

According to the invention, the radome is redesigned. At least two of the pins remain unchanged to be used for heat staking process. The at least two modified pins are used only for centering the RF-PCBA. The modified pins contain ribs (rounded or pointed ones) that help keep the RF-PCBA in a centered position as much as possible.

The housing part according to the invention is designed to remove the at least four pins for heat staking and retain the at least two existing centering pins at the bottom of the housing. This modification according to the invention allows the DSP-PCBA to be a moved for the assembly of the first BTB connector of the RF-PCBA and the second BTB connector of the DSP-PCBA.

In an embodiment of the method according to the invention, once heat staking process of the first subassembly (radome plus shield plus RF-PCBA plus spacer) is completed, the first subassembly is taken with a vacuum tool and prepositioned in X coordinate direction, Y coordinate direction and Z coordinate direction towards the second subassembly. The final assembly step performs a top-down move (in Z-coordinate direction) to connect the first BTB connector of the RF-PCBA and the second BTB connector of the DSP-PCBA.

At this stage, the first BTB connector and the second BTB connector are not yet completely assembled, and the DSP-PCBA in the housing part is not in a fixed position.

In an embodiment of the invention, the tabs are prolonged to contact the DSP-PCBA surface after the laser welding process. The tabs touch new grounded areas of the DSP-PCBA to hold the DSP-PCBA in position in the Z coordinate direction.

It is believed that the present disclosure and many of its attendant advantages will be understood by the foregoing description, and it will be apparent that various changes may be made in the form, construction, number and arrangement of the components without departing from the disclosed subject matter or without sacrificing all of its material advantages. The form described is merely explanatory, and it is the intention of the following claims to encompass and include such changes. Accordingly, the scope of the invention should be limited only by the claims appended hereto.

### BRIEF DESCRIPTION OF THE DRAWINGS

The numerous advantages of the disclosure may be better understood by those skilled in the art by reference to the accompanying figures in which:
**Figure 1** shows a perspective view of a prior art radome.
**Figure 2** is a perspective view of a schematic RF-PCBA mounted to a prior art radome.
**Figure 3** shows a perspective view of a spacer mounted on top of the RF-PCBA.
**Figure 4** shows a perspective view of an embodiment of a radome according to the invention.
**Figure 5** shows a perspective view of an embodiment of a modified pin which is part of the radome.
**Figure 6** shows a top view of the modified pin of Fig. 5 in cooperation with the RF-PCBA.
**Figure 7** is a perspective view of a prior art housing part, which is designed to receive the DSP-PCBA.
**Figure 8** is a perspective view of a prior art second subassembly.
**Figure 9** is a perspective view of an embodiment of the housing part according to the invention, which is designed to receive the DSP-PCBA.
**Figure 10** is a perspective view of an embodiment of a centering pin of the housing part in cooperation with the DSP-PCBA.
**Figure 11** is a view of an embodiment of the first subassembly prior to the assembly with the second subassembly.
**Figure 12** is a view of the second subassembly prior to the assembly with the first subassembly.
**Figure 13** is a perspective view of a mounting position of the first subassembly and the second subassembly.
**Figure 14** is a perspective view of the joining a first BTB connector with a second BTB connector.
**Figure 15** is a perspective view of an embodiment of the spacer.
**Figure 16** is a detailed perspective view showing the contact between a tab of the spacer and a support of the DSP-PCBA according to the prior art.
**Figure 17** is a detailed perspective view showing the contact between a tab of the shield and the DSP-PCBA according to an embodiment of the invention.
**Figure 18** is perspective view of the joined first BTB connector and the second BTB connector according to an embodiment of the invention.

### DETAILED DESCRIPTION

In the ensuing description, numerous specific details are provided to enable maximum understanding of the embodiments that are provided by way of example. The embodiments may be implemented with or without specific details, or else with other methods, components, materials, etc. In other circumstances, well-known structures, materials, or operations are not illustrated or described in detail so that various aspects of the embodiments will not be obscured. Reference in the course of the present description to "an embodiment" or "one embodiment" means that a particular structure, peculiarity, or characteristic described in connection with its implementation is comprised in at least one embodiment. Hence, phrases such as "in an embodiment" or "in one embodiment" that may recur in various points of the present description do not necessarily refer to one and the same embodiment. Furthermore, the particular structures, peculiarities, or characteristics may be combined in any convenient way in one or more embodiments.

Same reference numerals refer to same elements or elements of similar function throughout the various figures. Furthermore, only reference numerals necessary for the description of the respective figure are shown in the figures. The shown embodiments represent only examples of how the invention can be carried out. This should not be regarded as a limitation of the invention.

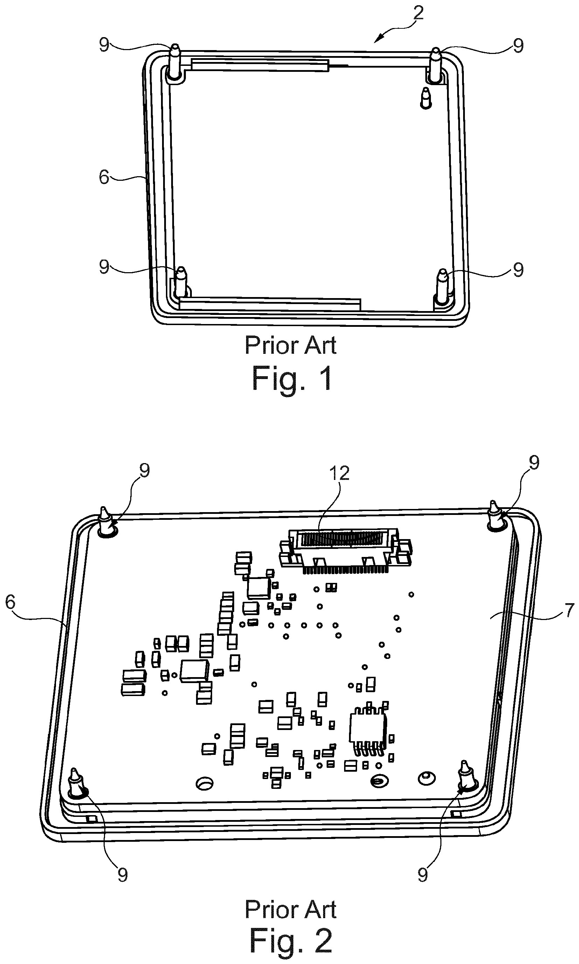

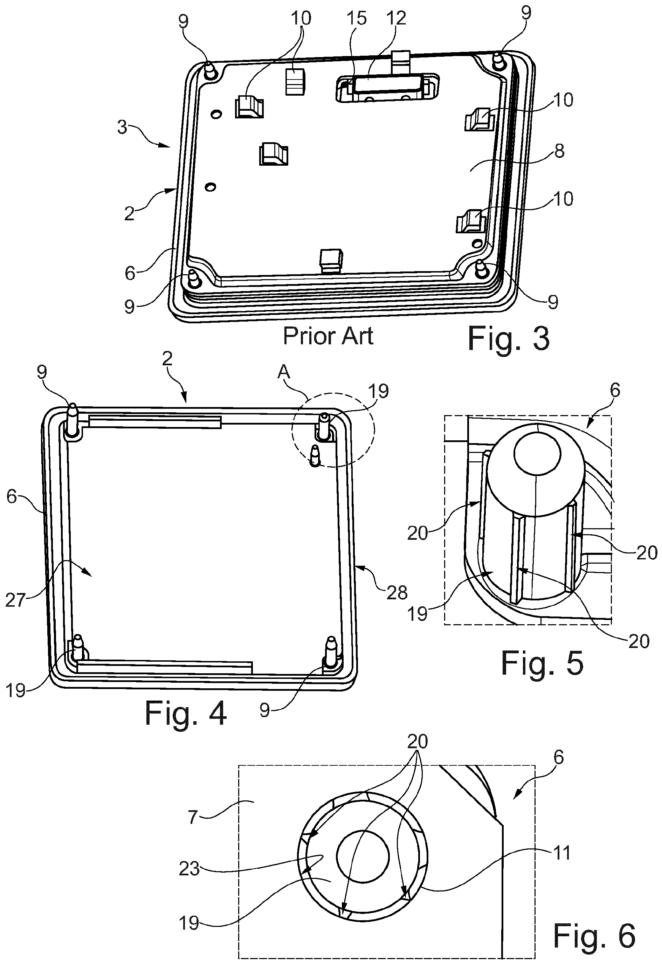

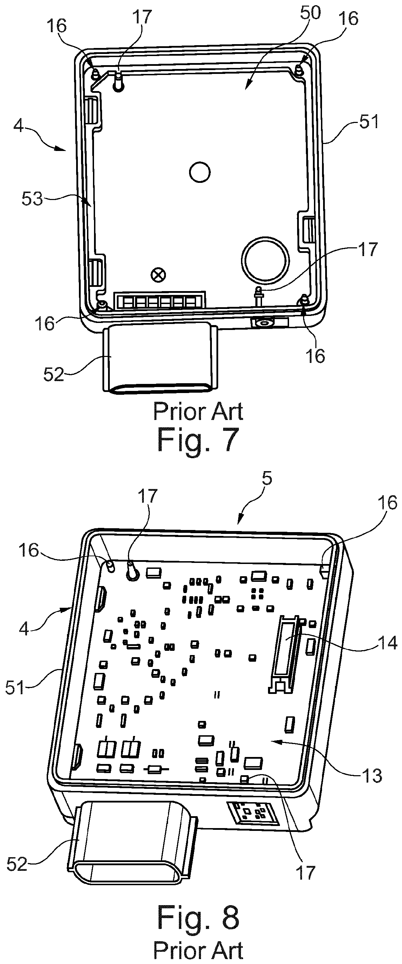

**Figure 1** shows a perspective view of a prior art radome **6.** The radome **6** carries four pins **9.** As shown in **Figure 2****,** the four pins **9** receive an RF-PCBA **7.** The RF-PCBA **7** carries a first BTB connector **12.** **Figure 3** shows a perspective view of a spacer **8** mounted on top of the RF-PCBA **7.** A first subassembly **3** is defined by at least the radome **6,** a shield (not shown) and the stacked RF-PCBA **7** and the spacer **8.** The RF-PCBA **7** is sandwiched between the shield on the radome **6** and the spacer **8.** A plurality of tabs **10** are part of the spacer **8.** An opening **15** in spacer **8** allows access to the first BTB connector **12** of RF-PCBA **7.** At least with the pins **9,** the heat stacked RF-PCBA **7** and the spacer **8** together with the radome **6** and the shield define the first subassembly **3.** The radome **6** of first subassembly **3** defines the housing cover **2** after the first subassembly **3** has been laser welded to the second subassembly **5** (see Fig. 8).

**Figure 4** shows a perspective view an embodiment of a radome **6** according to the invention. The radome **6** shown here carries two pins **9** and two modified pins **19.** The pins **9** are arranged diagonally opposite each other on the inner surface **27** of radome **6,** and the modified pins **19** are also arranged diagonally opposite each other on the inner surface **27** of radome **6.**

**Figure 5** shows a perspective view of a modified pin **19** which is part of the radome **6** and marked with area **A** in Fig. 4. Each modified pin **19** of radome **6,** which substitutes the respective pin **9** of radome **6,** carries at least three longitudinally arranged ribs **20.** For example, the ribs **20** may have a rounded or pointed form.

**Figure 6** shows a top view of the modified pin **19** of Fig. 5 in cooperation with the RF-PCBA **7.** The modified pin **19** reaches through a corresponding assembly hole **11** when RF-PCBA **7** is placed on radome **6.** The modified pin **19** itself is not in contact with a circumference **23** of assembly hole **11** of RF-PCBA **7,** but the at least three longitudinally arranged ribs **20** of modified pin **19** contact assembly hole **11.** This maintains a centered position of RF-PCBA **7.**

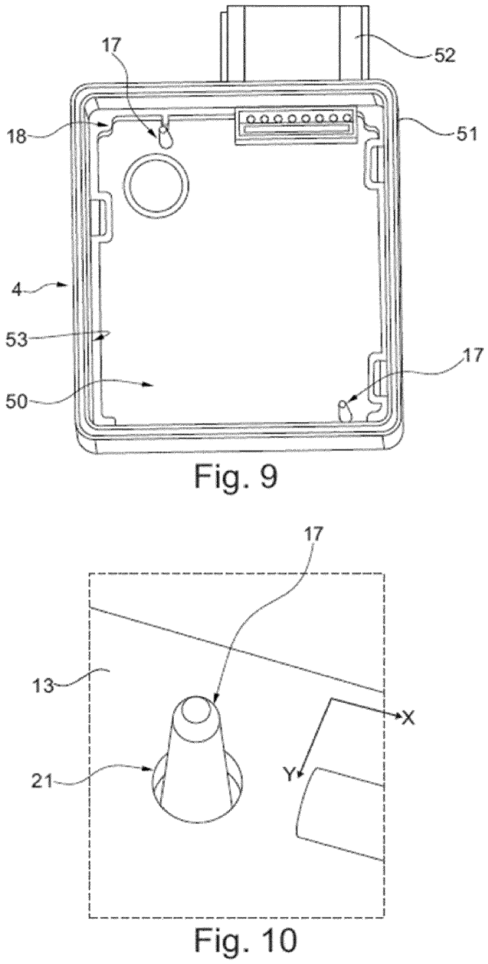

**Figure 7** is a perspective view of a prior art housing part **4,** which is designed to receive the DSP-PCBA **13** (see Fig. 8). A bottom **50** of housing part 4 carries four pins **16** which are used to hold the DSP-PCBA **13** in a fixed position after the heat stacking process. The four pins **16** are part of a contact surface **18** (see Fig. 9) which is arranged around an edge **53** of bottom **50** of housing part **4.** Bottom **50** of housing part **4** has also at least two centering pins **17** which reach through DSP-PCBA **13.** Housing part **4** comprises the bottom **50,** a wall **51** and one connector **52,** which may be an integral part of wall **51.** A perspective view of a prior art second subassembly **5** and the DSP-PCBA **13** are shown in **Figure 8****.** The DSP-PCBA **13** is also fixed in position in housing part **4** of second subassembly **5.**

**Figure 9** is a perspective view of an embodiment of the housing part **4** according to an embodiment of the invention, which is also designed to receive the DSP-PCBA **13** (see Fig. 10). Contact surface **18** is formed around an edge **53** of bottom **50** of housing part **4.** Here, contact surface **18** does not carry pins **16** which can be used to heat stack DSP-PCBA **13** in housing part **4.** Bottom **50** carries only centering pins **17** for DSP-PCBA **13.**

**Figure 10** is a perspective view of a centering pin **17** (prior art) of housing part **4** in cooperation with the DSP-PCBA **13.** Each of the centering pins **17** reaches through a hole **21** formed in DSP-PCBA **13** in a non-contact manner. The non-contact centering pins **17** allow the DSP-PCBA **13** to be moved in an X-coordinate direction **X** and a Y-coordinate direction **Y** when the DSP-PCBA **13** rests on the contact surface **18.**

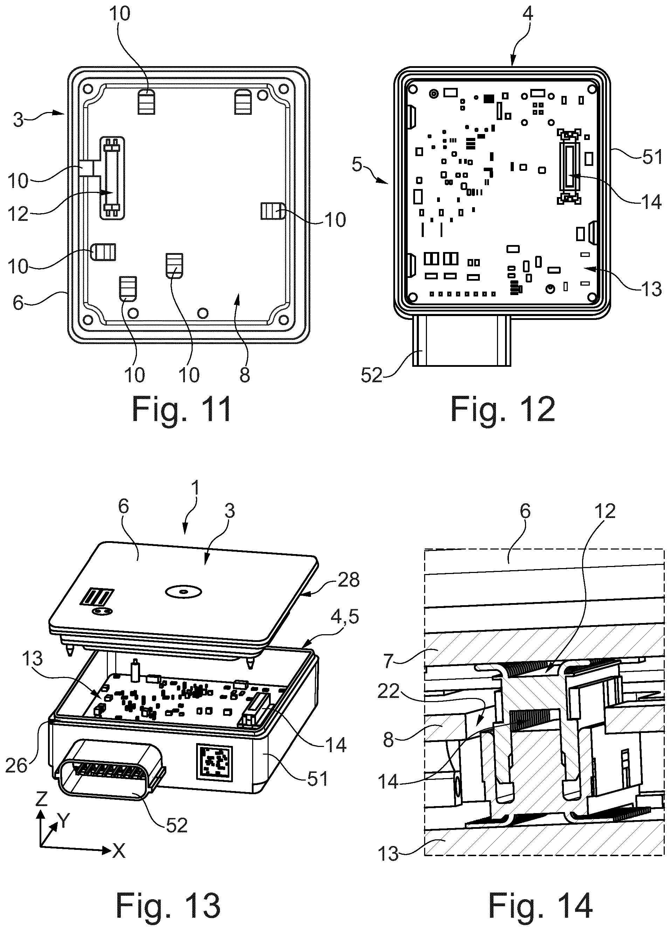

**Figure 11** is a view of an embodiment of the first subassembly **3** prior to assembly with the second subassembly **5,** and **Figure 12** is a view of the second subassembly **5** prior to assembly with the first subassembly **3.** First subassembly **3** comprises at least the radome **6,** the shield (not visible), the RF-PCBA **7** (covered by the spacer **8**), and the spacer **8.** Spacer **8** carries the tabs **12.** Second subassembly **5** comprises the housing part **4** and the DSP-PCBA **13** positioned therein. Housing part **4** is defined by the bottom **50** (see Fig. 9), the surrounding wall **51,** and the connector **52.** The DSP-PCBA **13** carries a second BTB connector **14.**

**Figure 13** is a perspective view of a mounting position of the first subassembly **3** from Fig. 11 and an embodiment of the second subassembly **5** from Fig. 12. Prior to lowering first subassembly **3** in a Z-coordinate direction **Z,** first subassembly **3** is prepositioned in an X-coordinate direction **X,** a Y- coordinate direction **Y** and the Z-coordinate direction **Z** with respect to second subassembly **5.** Once the lowering of first subassembly **3** into second subassembly **5** is complete, the housing product **1** for the first subassembly **3** and second subassembly **5** of the radar sensor (not shown) is formed. The closed housing product **1** is defined by a form fit of a peripheral rim **28** of first subassembly **3** and the surrounding wall **51** of housing part **4** of second subassembly **5.** Wall **51** may have a surrounding rib **26** at its upper end.

**Figure 14** is a perspective view of the joining process of the first BTB connector **12** of RF-PCBA **7,** which is part of first subassembly **3,** with the second BTB connector **14** of DSP-PCBA **13,** which is part of second subassembly **5.** During the final step of moving the first subassembly **3** in the Z coordinate direction **Z,** the first BTB connector **12** of RF-PCBA **7,** which reaches through an opening **22** of spacer **8,** engages the second BTB connector **14** of DSP-PCBA **13.** As mentioned before, in first subassembly **3,** RF-PCBA **7** is sandwiched between radome **6** and the spacer **8.**

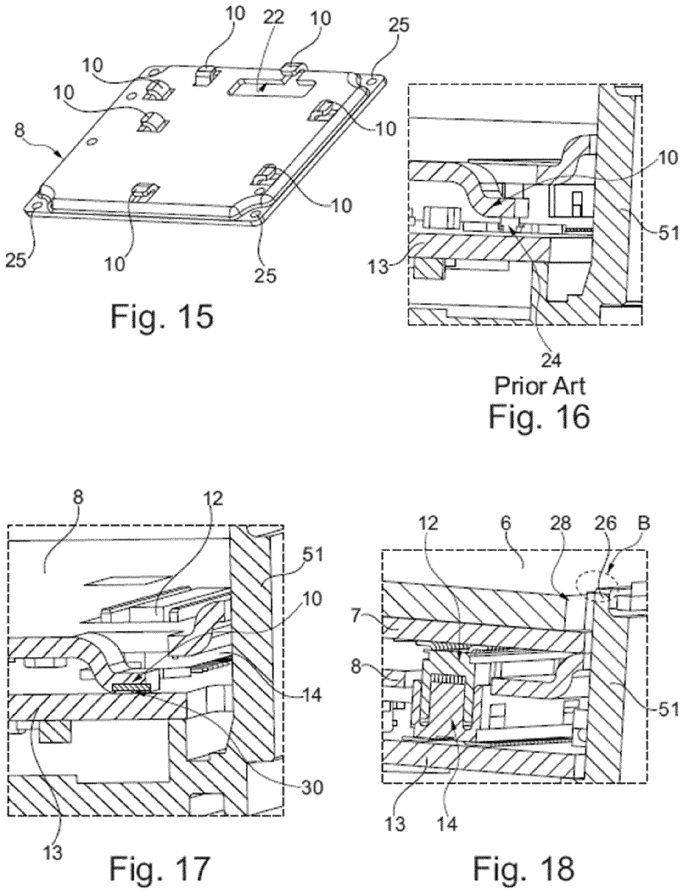

**Figure 15** is a perspective view of the spacer **8.** Assembly holes **25** may be used to receive pins **9** (not shown here). An opening **22** in shield **8** allows access to the first BTB connector **12** of first subassembly **3** (see Fig. 11).

**Figure 16** is a detailed perspective view showing the contact between a tab **10** of spacer **8** of first subassembly **3,** tab **10** being in contact with a support **24** on the DSP-PCBA **13** according to the prior art. The contacts between the tabs **10** and the supports **24** are surrounded by the wall **51** of housing part **4** of second subassembly **5.**

**Figure 17** is a detailed perspective view showing the contact between a tab **10** of spacer **8** of first subassembly **3** and the DSP-PCBA **13** of second subassembly **5** according to an embodiment of the invention. Each tab **10** rests on a grounded area **30** when the first subassembly **3** is assembled with the second subassembly **5** to form the housing **1.** A single grounded area **30** is placed between the respective tab **10** and the DSP-PCBA **13** of the second subassembly **5.** To achieve contact between the tabs **10** and the DSP-PCBA **13,** the tabs **10** are prolonged.

**Figure 18** is perspective prior art view of the joined first BTB connector **12** of RF-PCBA **7** and the second BTB connector **14** of DSP-PCBA **13** according to prior art. Here, the radome **6** of first subassembly **3** is surrounded by the wall **51** of housing part **4.** The laser welding is the final step of the assembly of the housing product **1.** As shown by area **B,** a peripheral rim **28** of radome **6** of first subassembly **3** lies opposite to a surrounding rib **26** of wall **51** of housing part **4** of second subassembly **5.** Laser welding is carried out between the peripheral rim **28** and the surrounding rib **26.** At this point the first BTB connector **12** and the second BTB connector **14** are fully joined and are operable to exchange data between the first subassembly **3** and the second subassembly **5.**

It is believed that the present disclosure and many of its attendant advantages will be understood by the foregoing description, and it will be apparent that various changes may be made in the form, construction, number and arrangement of the components without departing from the disclosed subject matter or without sacrificing all of its material advantages. The form described is merely explanatory, and it is the intention of the following claims to encompass and include such changes. Accordingly, the scope of the invention should be limited only by the claims appended hereto.

### LIST OF REFERENCE NUMERALS

- 1: Housing product
- 2: Housing cover
- 3: First subassembly
- 4: Housing part
- 5: Second subassembly
- 6: Radome
- 7: Radio frequency printed circuit board assembly (RF-PCBA)
- 8: Spacer
- 9: Pins of radome
- 10: Tab
- 11: Assembly hole
- 12: First board-to-board connector (BTB connector)
- 13: Digital signal processor printed circuit board assembly (DSP-PCBA)
- 14: Second board-to-board connector (BTB connector)
- 15: Opening
- 16: Pin of second subassembly
- 17: Centering pin
- 18: Contact surface
- 19: Modified pin
- 20: Rib
- 21: Hole
- 22: Opening
- 23: Circumference
- 24: Support
- 25: Assembly hole
- 26: Surrounding rib
- 27: Inner surface
- 28: Peripheral rim
- 30: Grounded area
- 50: Bottom
- 51: Wall
- 52: Connector
- 53: Edge
- A: Area
- B: Area
- X: X-coordinate direction
- Y: Y-coordinate direction
- Z: Z-coordinate direction

## Claims

1. A housing product (1) for a radar sensor,
the housing product (1) being defined by a first subassembly (3) joined with a second subassembly (5),
the first subassembly (3) comprising at least a radome (6), an RF-PCBA (7) and a spacer (8), wherein the RF-PCBA (7) is sandwiched between the radome (6) and the spacer (8), the radome (6) has at least four pins (9) to fix the RF-PCBA (7) and the spacer (8) in position, the second subassembly (5) comprises a housing part (4) with a DSP-PCBA (13) positioned at a bottom (50) of the housing part (4), and the RF-PCBA (7) has a first BTB connector (12) and the DSP-PCBA (13) has a second BTB connector (14) which are electrically connected, when the first subassembly (3) and the second subassembly (5) are joined together;
**characterized by**
at least two modified pins (19) of the radome (6) substituting at least two of the at least four pins (9) of the radome (6);
a homogeneous contact surface (18) provided around an edge (53) of the bottom (50) of the housing part (4); and
centering pins (17) for the DSP-PCBA (13) formed on the bottom (50) of the housing part (4) to align the DSP-PCBA (13) to rest on the contact surface (18) on the bottom (50).

2. The housing product (1) as claimed in claim 1, wherein the radome (6) has two pins (9) and two modified pins (19), wherein each modified pin (19) carries at least three longitudinally arranged ribs (20) each of which contact a circumference (23) of an assembly hole (11) of the RF-PCBA (7).

3. The housing product (1) as claimed in any one of the preceding claims, wherein each of the centering pins (17) reaches through a hole (21) formed in the DSP-PCBA (13) in a non-contact manner, whereby the centering pins (17) allow the DSP-PCBA (13) to be moved in an X-coordinate direction (X) and a Y- coordinate direction (Y) when the DSP-PCBA (13) rests on the contact surface (18).

4. The housing product (1) as claimed in claim 3, wherein the first BTB connector (7) of the RF-PCBA (7) and the second BTB connector (14) of the DSP-PCBA (13) are in an assembled position when a surrounding edge (28) of the radome (3) of the first subassembly (3) is laser welded to a surrounding rib (26) of the surrounding wall (51) of the housing part (4).

5. The housing product (1) as claimed in claim 4, wherein the spacer (8) of the first subassembly (3) has formed a plurality of tabs (10), and each tab (10) rests on a grounded area (30) when the first subassembly (3) is assembled with the second subassembly (5) to form the housing (1), wherein the grounded area (30) is placed between the tabs (10) and the DSP-PCBA (13) of the second subassembly (5).

6. A method for assembling a housing product (1) for a radar sensor, comprising the following steps:
stacking at least a RF-PCBA (7) and a spacer (8) on a radome (6), which carries at least two pins (9) and at least two modified pins (19), wherein the modified pins (19) have at least three longitudinally arranged ribs (20) contacting a circumference (23) of corresponding assembly holes (11) of the RF-PCBA (7) and corresponding assembly holes (25) of the spacer (8);
fixing the RF-PCBA (7) and the spacer (8) in the radome (6) with a heat stacking process acting on the two pins (9) to form a first subassembly (3);
inserting a DSP-PCBA (13) into a housing part (4) such that at least two centering pins (17) reach through a corresponding hole (21) of the DSP-PCBA (13) until the DSP-PCBA (13) rests on a homogeneous contact surface (18) provided around an edge (53) of a bottom of the housing part (4) to form a second subassembly (5);
lowering the first subassembly (3) into the second subassembly (5) to form the housing product (1); and
laser welding a peripheral rim (28) of the first subassembly (3) to a surrounding rib (26) of the second subassembly (5).

7. The method as claimed in claim 6, wherein prior to lowering the first subassembly (3) in a Z-coordinate direction, the first subassembly (3) is prepositioned in an X-coordinate direction (X), a Y- coordinate direction (Y), and the Z-coordinate direction (Z) with respect to the second subassembly (5).

8. The method as claimed in any one of the preceding claims 6 and 7, wherein the lowering of the first subassembly (3) into the housing part (4) of the second subassembly (5) is performed along the Z-coordinate direction (Z), wherein the DSP-PCBA (13) of the second subassembly (5) is positioned by means of centering pins (17), which contactless reach through a corresponding hole (21) formed in the DSP-PCBA (13), thereby enabling a movement of the DSP-PCBA (13) in the X-coordinate direction (X) and the Y- coordinate direction (Y), which facilitates assembly of the first BTB connector (12) of the RF-PCBA (7) of the first subassembly (3) and the second BTB connector (14) of the DSP-PCBA (13) of the second subassembly (5).

9. The method as claimed in claim 6, wherein after the laser welding is complete, a plurality of tabs (10) of the spacer (8) of the first subassembly (3) contact the DSP-PCBA (13) of the second subassembly (5) in order to hold the DSP-PCBA (13) in place and prevent movement of the DSP-PCBA (13) in the Z-coordinate direction (Z).

10. The method as claimed in claim 9, wherein the tabs (10) contact a grounded area (30) which is placed between the tabs (10) of the spacer (8) of the first subassembly (3) and the DSP-PCBA (13) of the second subassembly (5).
